# EUROPEAN PATENT APPLICATION

(11) **EP 4 304 240 A1**
(43) Date of publication of application: **10.01.2024**
(21) Application number: 21928582.2
(22) Date of filing: 05.03.2021
(51) Int. Cl.: H04W 24/08, H04L 5/00

(54) **BEAM FAILURE DETECTION METHOD, BEAM FAILURE DETECTION APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hughes, Andrea Michelle
(86) International application number: PCT/CN2021/079369
(87) International publication number: WO 2022/183499

(57) **Abstract**

The present invention relates to a beam failure detection method, a beam failure detection apparatus, and a storage medium. The beam failure detection method comprises: determining a reference signal resource set for beam failure detection, and determining a reference signal resource subset on the basis of the reference signal resource set, and performing beam failure detection on the basis of the joint radio link quality of the reference signal resource subset. According to the present invention, beam failure detection jointly using reference signal resources of multiple TRPs can be performed in a multi-TRP communication scenario, so that the accuracy of beam failure detection is ensured.

## Description

### TECHNICAL FIELD

The disclosure relates to a field of communication technologies, and more particularly, to a beam failure detection method and apparatus, and a storage medium.

### BACKGROUND

In new radio (NR) technology, for example, when a communication frequency band is within a frequency range 2 (FR2), due to rapid attenuation of high frequency channels, beam-based transmission and reception are required to ensure coverage. When a network device (such as, a base station) has multiple transmission and reception points (TRPs), multiple TRPs (multi-TRP) may be employed to provide services for a terminal, for example, the multi-TRP is employed to send a physical downlink control channel (PDCCH) for the terminal.

In the related art, in a solution that the multi-TRP is employed to send the PDCCH, a transmission configuration indication (TCI) state for transmitting the PDCCH may be configured for the terminal, that is, a beam is configured. For example, a control resource set (CORESET) is configured for the terminal, and a TCI state corresponding to the CORESET is configured. The TCI state is configured to indicate a quasi-co-location (also referred to as quasi-co-located, QCL) relationship between the PDCCH in the CORESET and a reference signal indicated by the TCI state. There is a solution where different and associated CORESETs are configured for the terminal, so that the multiple TRPs send the PDCCH to the terminal. For the PDCCH sent by the multi-TRP, a same downlink control information (DCI) signaling may be sent by employing multiple beams.

For a scene where the multiple beams are employed to send the same DCI signaling, how to determine a reference signal resource for a beam failure detection by the terminal and how to determine whether a beam failure occurs by the terminal are technical problems to be solved.

### SUMMARY

In order to overcome problems existing in the related art, the disclosure provides a beam failure detection method and apparatus, and a storage medium.

According to a first aspect of embodiments of the disclosure, there is provided a beam failure detection method, which is applied to a terminal. The beam failure detection method includes:
determining a reference signal resource set for a beam failure detection; determining a reference signal resource subset based on the reference signal resource set, and performing the beam failure detection based on a joint radio link quality of the reference signal resource subset.

In an implementation, determining the reference signal resource set for the beam failure detection includes:
receiving configuration information sent by a network device; and determining the reference signal resource set for the beam failure detection based on the configuration information.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the beam failure detection method also includes: determining the pair relationship, and determining one or more reference signal resources included in the reference signal resource subset based on the pair relationship.

In an implementation, determining the pair relationship includes at least one of:
receiving an indicating signaling from the network device, and determining the pair relationship based on the indicating signaling; and
determining the pair relationship based on a predefined rule.

In an implementation, the configuration information is used to configure one or more TCI states of one or more control resource sets.

In an implementation, the reference signal resource set is determined based on one or more reference signal resources indicated by the one or more TCI states.

In an implementation, the reference signal resource subset includes reference signal resources indicated by TCI states of control resource sets having a pair relationship. The control resource sets having the pair relationship include control resource sets corresponding to a plurality of TCI states; and/or the control resource sets having the pair relationship include control resource sets respectively associated with a plurality of search space sets having a connection relationship.

In an implementation, performing the beam failure detection based on the joint radio link quality of the reference signal resource subset includes: determining the joint radio link quality of the one or more reference signal resources in the reference signal resource subset; and performing the beam failure detection based on the joint radio link quality and a radio link quality threshold.

According to a second aspect of embodiments of the disclosure, there is provided a beam failure detection method, which is applied to a network device. The beam failure detection method includes:
configuring a reference signal resource set for a beam failure detection, in which the reference signal resource set is configured to determine a reference signal resource subset, and a joint radio link quality of the reference signal resource subset is used for the beam failure detection.

In an implementation, configuring the reference signal resource set for the beam failure detection includes: sending configuration information, in which the configuration information is used to configure the reference signal resource set for the beam failure detection.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the beam failure detection method includes: configuring the pair relationship, in which the pair relationship is used to configure the reference signal resources included in the reference signal resource subset.

In an implementation, configuring the pair relationship includes at least one of:
sending an indicating signaling, the indicating signaling being used to configure the pair relationship; and
configuring the pair relationship based on a predefined rule.

In an implementation, the configuration information is used to configure one or more TCI states of one or more control resource sets.

In an implementation, the reference signal resource set is determined based on one or more reference signal resources indicated by the one or more TCI states.

In an implementation, the reference signal resource subset includes reference signal resources indicated by TCI states of control resource sets having a pair relationship; the control resource sets having the pair relationship include control resource sets corresponding to a plurality of TCI states; and/or the control resource sets having the pair relationship include control resource sets respectively associated with a plurality of search space sets having a connection relationship.

According to a third aspect of embodiments of the disclosure, there is provided a beam failure detection apparatus, which is applied to a terminal. The beam failure detection apparatus includes:
a processing unit, configured to determine a reference signal resource set for a beam failure detection, to determine a reference signal resource subset based on the reference signal resource set, and to perform the beam failure detection based on a joint radio link quality of the reference signal resource subset.

In an implementation, the beam failure detection apparatus also includes a receiving unit. The receiving unit is configured to receive configuration information sent by a network device; and to determine the reference signal resource set for the beam failure detection based on the configuration information.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the processing unit is also configured to determine the pair relationship, and to determine one or more reference signal resources included in the reference signal resource subset based on the pair relationship.

In an implementation, the beam failure detection apparatus also includes a receiving unit. The receiving unit is configured to receive an indicating signaling from the network device and to determine the pair relationship based on the indicating signaling. And/or the processing unit is configured to determine the pair relationship based on a predefined rule.

In an implementation, the configuration information is used to configure one or more TCI states of one or more control resource sets.

In an implementation, the reference signal resource set is determined based on one or more reference signal resources indicated by the one or more TCI states.

In an implementation, the reference signal resource subset includes reference signal resources indicated by TCI states of control resource sets having a pair relationship. The control resource sets having the pair relationship include control resource sets corresponding to a plurality of TCI states; and/or the control resource sets having the pair relationship include control resource sets respectively associated with a plurality of search space sets having a connection relationship.

In an implementation, the processing unit is configured to determine the joint radio link quality of the one or more reference signal resources in the reference signal resource subset; and to perform the beam failure detection based on the joint radio link quality and a radio link quality threshold.

According to a fourth aspect of embodiments of the disclosure, there is provided a beam failure detection apparatus, which is applied to a network device. The beam failure detection apparatus includes:
a processing unit, configured to configure a reference signal resource set for a beam failure detection, in which the reference signal resource set is configured to determine a reference signal resource subset, and a joint radio link quality of the reference signal resource subset is configured for the beam failure detection.

In an implementation, the beam failure detection apparatus also includes a sending unit. The sending unit is configured to send configuration information, in which the configuration information is used to configure the reference signal resource set for the beam failure detection.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the processing unit is also configured to configure the pair relationship, in which the pair relationship is used to configure the reference signal resources included in the reference signal resource subset.

In an implementation, the beam failure detection apparatus also includes a sending unit. The sending unit is configured to send an indicating signaling, the indicating signaling being used to configure the pair relationship; and/or the processing unit is configured to configure the pair relationship based on a predefined rule.

In an implementation, the configuration information is used to configure one or more TCI states of one or more control resource sets.

In an implementation, the reference signal resource set is determined based on one or more reference signal resources indicated by the one or more TCI states.

In an implementation, the reference signal resource subset includes reference signal resources indicated by TCI states of control resource sets having a pair relationship; the control resource sets having the pair relationship include control resource sets corresponding to a plurality of TCI states; and/or the control resource sets having the pair relationship include control resource sets respectively associated with a plurality of search space sets having a connection relationship.

According to a fifth aspect of embodiments of the disclosure, there is provided a beam failure detection apparatus, including:
a processor;
a memory for storing instructions executable by the processor;
in which the processor is configured to: execute the beam failure detection method according to the first aspect or according to any implementation of the first aspect.

According to a sixth aspect of embodiments of the disclosure, there is provided a beam failure detection apparatus, including:
a processor;
a memory for storing instructions executable by the processor;
in which the processor is configured to: execute the beam failure detection method according to the second aspect or according to any implementation of the second aspect.

According to a seventh aspect of embodiments of the disclosure, there is provided a storage medium. The storage medium has instructions stored thereon. A terminal is enabled to execute the beam failure detection method according to the first aspect or according to any implementation of the first aspect when the instructions in the storage medium are executed by a processor in the terminal,
According to an eighth aspect of embodiments of the disclosure, there is provided a storage medium. The storage medium has instructions stored thereon. A network device is enabled to execute the beam failure detection method according to the second aspect or according to any implementation of the second aspect when the instructions in the storage medium are executed by a processor in the network device.

The technical solutions provided in embodiments of the disclosure may have advantageous effects as follows. The reference signal resource set for the beam failure detection is determined, and the beam detection is performed based on the joint ratio link quality of the reference signal resource subset included in the reference signal resources, to implement performing the beam failure detection by combining the reference signal resources of the multiple TRPs in a multi-TRP communication scene, thereby ensuring the accuracy of the beam failure detection.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the disclosure, and serve to explain the principle of embodiments of the disclosure together with the specification.
FIG 1 is a schematic diagram illustrating a wireless communication system according to an exemplary embodiment.
FIG 2 is a flow chart illustrating a beam failure detection method according to an exemplary embodiment.
FIG 3 is a flow chart illustrating a beam failure detection method according to an exemplary embodiment.
FIG 4 is a flow chart illustrating a beam failure detection method according to an exemplary embodiment.
FIG 5 is a flow chart illustrating a beam failure detection method according to an exemplary embodiment.
FIG 6 is a flow chart illustrating a beam failure detection method according to an exemplary embodiment.
FIG 7 is a flow chart illustrating a beam failure detection method according to an exemplary embodiment.
FIG 8 is a flow chart illustrating a beam failure detection method according to an exemplary embodiment.
FIG 9 is a flow chart illustrating a beam failure detection method according to an exemplary embodiment.
FIG 10 is a flow chart illustrating a beam failure detection method according to an exemplary embodiment.
FIG 11 is a flow chart illustrating a beam failure detection method according to an exemplary embodiment.
FIG 12 is a block diagram illustrating a beam failure detection apparatus according to an exemplary embodiment.
FIG 13 is a block diagram illustrating a beam failure detection apparatus according to an exemplary embodiment.
FIG 14 is a block diagram illustrating a beam failure detection apparatus according to an exemplary embodiment.
FIG 15 is a block diagram illustrating a beam failure detection apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

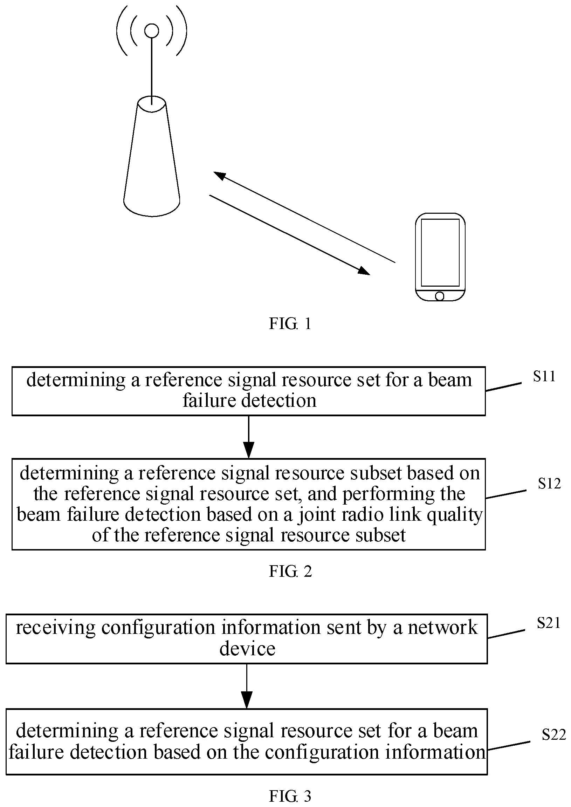

A beam failure detection method according to embodiments of the disclosure may be applied to a wireless communication system illustrated in FIG 1. Referring to FIG 1, the wireless communication system includes a terminal and a network device. The terminal is connected to the network device via a wireless resource, and sends and receives data.

It may be understood that the wireless communication system illustrated in FIG 1 is only a schematic illustration, and the wireless communication system may further include other network devices, for example, may also include a core network device, a wireless relay device, and a wireless backhaul device, etc., which are not shown in FIG 1. The number of network devices and the number of terminals included in the wireless communication system are not limited in embodiments of the disclosure.

It can be further understood that the wireless communication system according to the embodiment of the disclosure is a network that provides a wireless communication function. The wireless communication system can employ various communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to the capacity, speed, delay and other factors of the network, the network can be classified into a second generation (2G) network, a 3G network, a 4G network or a future evolution network, such as a 5G network. The 5G network can also be referred to as a new radio (NR) network. For convenience of description, the wireless communication network may be referred to as a network for short in the disclosure.

Further, the network device involved in the disclosure may also be referred to as a wireless access network device. The wireless access network device may include: a base station, an evolved node base station (evolved node B, eNB), a home base station, an access point (AP), a wireless relay node, a wireless backhaul node, a transmission point (TP) or a transmission and reception point (TRP) in a wireless fidelity (WIFI) system, etc. The base station can also be a gNB in an NR system, or can also be a component or a part of a device that constitutes a base station. When it is a vehicle-to-everything (V2X) communication system, the network device may also be a vehicle-mounted device. It should be understood that, in the embodiments of the disclosure, a specific technology and a specific device form adopted by the network device are not limited.

Further, the terminal involved in the disclosure may also be referred to as a terminal device, a user equipment (UE), a mobile station (MS), a mobile terminal (MT), etc., which is a device that provides voice and/or data connectivity. For example, the terminal may be a handheld device with a wireless connection function, a vehicle-mounted device, or the like. At present, some examples of terminals include: a mobile phone, a pocket personal computer (PPC), a palmtop computer, a personal digital assistant (PDA), a notebook computer, a tablet computer, a wearable device, or a vehicle-mounted device, etc. In addition, when it is a vehicle-to-everything (V2X) communication system, the terminal device can also be a vehicle-mounted device. It should be understood that a specific technology and a specific device form adopted by the terminal are not limited in the embodiments of the disclosure.

In the disclosure, data transmission between the network device and the terminal is performed based on beams. In the process of performing the data transmission based on the beams, the network device (such as a base station) may employ multiple TRPs (also called multi-TRP) to send the PDCCH to the terminal. In the related art, the network device (such as the base station) configures the terminal with a TCI state for transmitting the PDCCH when employing one TRP to send the PDCCH to the terminal, and the TCI state is configured to indicate a Quasi co-located (also referred to as Quasi co-location, QCL) relationship between the PDCCH and a reference signal indicated by the TCI state. For example, a configuration method includes: configuring one CORESET, such as CORESET#1, for the terminal, configuring a TCI state employed by the terminal when receiving a PDCCH in a resource in the CORESET#1 as TCI#1, and configuring for the terminal one search space set (SS set), which is associated with the CORESET#1. The terminal employs a beam corresponding to a reference signal resource indicated by the TCI#1 (that is, the beam is indicated by the TCI state) to receive the PDCCH on the resource in the SS set. There is a correspondence between the TCI state and the beam. In the disclosure, the beam and the TCI state are sometimes used interchangeably, and the beam corresponds to QCL information of a type D in the TCI state, which should be understood by those skilled in the art. At present, each SS set is merely associated with one CORESET, and each CORESET is merely configured with one TCI state. Different TRPs employ different beams to send the PDCCH when the network device (e.g., the base station) employs the multiple TRPs to send the PDCCH to the terminal.

Further, in order to implement the method that the multiple TRPs send a same PDCCH to improve a reliability of the PDCCH, there are multiple ways in the related art.

The first way: one CORESET is configured with two TCI states. One SS set is configured to be associated with the CORESET, then the SS set may correspond to the two TCI states. Alternatively, two SS sets are configured to be associated with the CORESET, and each SS set corresponds to one of the two TCI states.

The second way: one SS set is configured. The SS set is associated with two CORESETs, and each CORESET corresponds to one TCI state, so that the SS set can correspond to two TCI states.

The third way: two CORESETs are configured, and each CORESET corresponds to one TCI state. SS sets are configured respectively to be associated with the two CORESETs. That is, two SS sets are configured, which are associated with respective CORESETs and correspond to different TCI states. The two SS sets may be associated with a same CORESET or different CORESETs.

Based on the above method, the method that the multiple TRPs send the PDCCH may be implemented.

In the Rel-15/16, each CORESET corresponds to one TCI state, that is, each CORESET corresponds to a reference signal resource for indicating the TCI state. Therefore, for a reference signal resource for a beam failure detection, regardless of whether the reference signal resource is configured explicitly or implicitly, a radio link quality on each reference signal resource is independently measured and compared with a threshold (hereinafter also referred to as Qout) to determine whether a beam failure occurs. The beam failure may also be called a radio link failure, that is, when a radio link quality of each reference signal in a reference signal resource set for the failure detection is lower than Qout, it is determined that the radio link failure or the beam failure occurs.

For the Rel-17, due to introducing the multi-TRP transmitting the PDCCH, a same DCI signaling may be transmitted by employing multiple beams. For the case where the multiple beams are employed to transmit the same DCI, the terminal compares each of radio link qualities of reference signal resources on two beams with Qout when detecting whether the beam failure occurs in the PDCCH. There may be a case where each of the radio link qualities of the reference signal resources received on the two beams is lower than Qout. In this case, it may be determined that the beam failure occurs. However, the beam failure does not occur actually in a case where a joint radio link quality of the radio link qualities of the reference signal resources received on the two beams is not lower than Qout. Therefore, in this case, it is more appropriate to compare the joint radio link quality of the radio link qualities of the reference signal resources received on the two beams with Qout when the beam failure detection is performed based on a cell. Therefore, how to configure the reference signal resource for the beam failure detection based on a TRP and/or serving cell in case of multi-TRP PDCCH (the multi-TRP transmitting the PDCCH) and how to determine whether the beam failure occurs are technical problems to be solved.

Embodiments of the disclosure provide a beam failure detection method. The beam failure detection is also called BFD for short. With the beam failure detection method according to embodiments of the disclosure, the beam failure detection is performed based on a joint radio link quality of reference signal resources received based on multiple TCI states.

The joint radio link quality may also be called a combined radio link quality. In an implementation, the joint radio link quality may be a radio link quality obtained by summing radio link qualities corresponding to the reference signal resources received based on the multiple TCI states. Of course, a detailed way for calculating the joint radio link quality is not limited in embodiments of the disclosure. The joint radio link quality is configured to distinguish a radio link quality corresponding to a reference signal resource received through a single TCI state. In an example, a detailed way for calculating the joint radio link quality may be explained as follows, when a signal strength, a signal to interference plus noise ratio (SINR), or a signal noise ratio (SNR) is calculated, the signal strength S is a sum of signal strengths received in two TCI states, and/or the interference is an interference other than the signal strengths in the two TCI states, which may include a signal strength of the same reference signal resource received in the two TCI states, or signal strengths of different reference signal resources respectively received by employing the two TCI states.

FIG 2 is a flow chart illustrating a beam failure detection method according to an exemplary embodiment. As illustrated in FIG 2, the beam failure detection method is applied to a terminal, and includes the following steps.

At step S11, a reference signal resource set for a beam failure detection is determined.

At step S12, a reference signal resource subset is determined based on the reference signal resource set, and the beam failure detection is performed based on a joint radio link quality of the reference signal resource subset.

In the embodiment of the disclosure, it may be understood that the reference signal resource set for the beam failure detection is a reference signal resource set for the beam failure detection of a serving cell and/or a TRP. The reference signal resource set for the beam failure detection may include N reference signal resources, where N is a positive integer. The reference signal resource for performing the beam failure detection based on the joint radio link quality may be a determined reference signal resource subset in the reference signal resource set. The number of reference signal resources included in the reference signal resource subset may be M, where M is less than or equal to N.

With the beam failure detection method according to the embodiment of the disclosure, the reference signal resource subset is determined based on the reference signal resource set, and when the beam failure detection is performed based on the joint radio link quality of the reference signal resource subset, the beam failure detection may be performed based on the joint radio link quality and a radio link quality threshold. The radio link quality threshold may be, such as, Qout.

In an example, the radio link qualities of the reference signal resources in the reference signal resource subset are summed and then compared with Qout to determine whether the beam failure occurs. It may be understood that, in embodiments of the disclosure, when the beam failure detection is performed based on the joint radio link quality and the radio link quality threshold, the summation way is not limited, and other way may also be employed.

With the beam failure detection method according to embodiments of the disclosure, the terminal may determine the reference signal resource set for the beam failure detection based on configuration information of a network device.

FIG 3 is a flow chart illustrating a beam failure detection method according to an exemplary embodiment. As illustrated in FIG 3, the beam failure detection method is applied to a terminal, and includes the following steps.

At step S21, configuration information sent by a network device is received.

At step S22, a reference signal resource set for a beam failure detection is determined based on the configuration information.

With the beam failure detection method according to the embodiment of the disclosure, the configuration information sent by the network device to the terminal may be used to configure at least one reference signal resource set for the beam failure detection.

In an implementation of embodiments of the disclosure, a reference signal resource included in the reference signal resource subset may be a reference signal resource configured with multiple TCI states. Alternatively, the reference signal resource subset includes one or more reference signal resources, and each reference signal resource is merely configured with one TCI state.

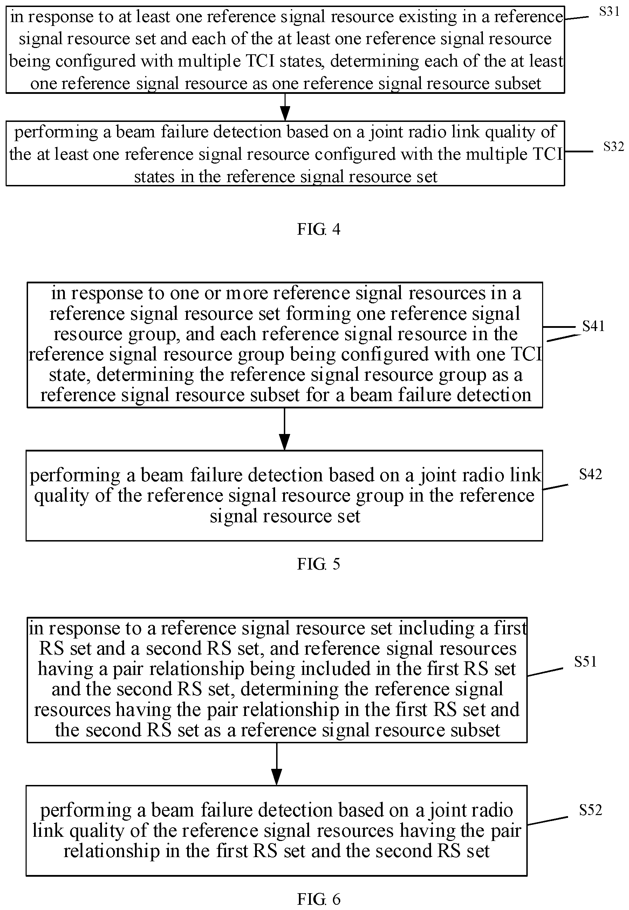

FIG 4 is a flow chart illustrating a beam failure detection method according to an exemplary embodiment. As illustrated in FIG 4, the beam failure detection method is applied to a terminal, and includes the following steps.

At step S31, in response to at least one reference signal resource existing in a reference signal resource set and each of the at least one reference signal resource being configured with multiple TCI states, each of the at least one reference signal resource is determined as one reference signal resource subset.

At step S32, a beam failure detection is performed based on a joint radio link quality of the at least one reference signal resource configured with the multiple TCI states in the reference signal resource set.

It may be understood that, one reference signal resource subset may include one reference signal resource configured with multiple TCI states in the embodiments of the disclosure. Alternatively, one reference signal resource subset includes multiple reference signal resources, and each reference signal resource is configured with only one TCI state.

It may be further understood that, one reference signal resource subset may also include one reference signal resource, and the reference signal resource is configured with only one TCI state in the embodiments of the disclosure. However, in this case, it may be understood that, there is no PDCCH transmitted by the multi-TRP.

In an example, the at least one reference signal resource set for the beam failure detection is configured to include N (N is a positive integer) reference signal resources. At least one reference signal resource in the N reference signal resources is configured with two TCI states. When the terminal employs the configured two TCI states to receive the at least one reference signal resource, a joint radio link quality on reference signal resources received based on the configured two TCI states is compared with Qout to determine whether the joint radio link quality on the reference signal resources is lower than Qout. In case that the joint radio link quality on the reference signal resources is not lower than Qout, the beam failure does not occur in the TRP and/or serving cell associated with the reference signal. Only when a joint radio link quality on one or more reference signal resources in all the reference signal resource subsets in the reference signal resource set for the beam failure detection is lower than Qout, it may be determined that the beam failure occurs in the TRP and/or serving cell corresponding to the reference signal resource set for the beam failure detection, and a link recovery is needed. One reference signal resource subset may include one reference signal resource configured with multiple TCI states. Alternatively, one reference signal resource subset includes one or more reference signal resources, and each reference signal resource is configured with only one TCI state. For example, one reference signal resource set for the beam failure detection includes the following reference signal resource subsets.

A reference signal resource subset 1: which includes RS#1, and the RS#1 is configured with TCI state#0 and TCI state#1. A joint radio link quality corresponding to the reference signal resource subset 1 is quality#1.

A reference signal resource subset 2: which includes RS#2 and RS#3, the RS#2 is configured with TCI state#2, and the RS#3 is configured with TCI state#3. A joint radio link quality corresponding to the reference signal resource subset 2 is quality#2.

A reference signal resource subset 3: which includes RS#4, and the RS#4 is configured with TCI state#4. A joint radio link quality corresponding to the reference signal resource subset 3 is quality#3.

Based on the above example, when the beam failure detection is performed based on the reference signal resource set, it may be determined that the beam failure occurs in the TRP and/or serving cell corresponding to the reference signal resource set only when each of the quality#1, the quality#2 and the quality#3 is lower than Qout, and the link recovery is needed. The quality#1, the quality#2 and the quality#3 in the disclosure may be respectively compared with different Qout values, or compared with a same Qout value. That is to say, different Qout values or the same Qout value may be set for the joint radio link qualities of different reference signal resource subsets. Different Qout values may be set based on types of the reference signal resource subsets when different Qout values are set. The types of the reference signal resource subsets include, but are not limited to, the following three types. Type 1, the reference signal resource subset includes one reference signal resource configured with multiple TCI states. Type 2, the reference signal resource subset includes multiple reference signal resources, and each reference signal resource is configured with only one TCI state. Type 3, the reference signal resource subset includes one reference signal resource configured with only one TCI state. The reference signal resource set for the beam failure detection may include one or more reference signal resource subsets, each of which has a same type or different type.

In an implementation of embodiments of the disclosure, the reference signal resource subset may include one or more reference signal resources, and each reference signal resource is configured with only one TCI state. The one or more reference signal resources each configured with only one TCI state may be understood as one reference signal resource group in the reference signal resource set. The reference signal resource group includes L reference signal resources, each of the L reference signal resources is configured with one TCI state, where L is a positive integer. L may be less than or equal to N.

FIG 5 is a flow chart illustrating a beam failure detection method according to an exemplary embodiment. As illustrated in FIG 5, the beam failure detection method is applied to a terminal, and includes the following steps.

At step S41, in response to one or more reference signal resources in a reference signal resource set forming one reference signal resource group, and each reference signal resource in the reference signal resource group being configured with one TCI state, the reference signal resource group is determined as a reference signal resource subset for a beam failure detection. In this case, the reference signal resource subset is the reference signal resource subset in the type 2 mentioned above.

At step S42, a beam failure detection is performed based on a joint radio link quality of the reference signal resource group in the reference signal resource set.

In an example, at least one reference signal resource set for the beam failure detection is configured to include N (N is an integer greater than 1) reference signal resources. At least two reference signal resources (such as, L) exist in the N reference signal resources, and form one reference signal resource group. Each reference signal resource in the reference signal resource group is configured with one TCI state. Therefore, a radio link quality of each reference signal is received by employing the TCI state corresponding to each reference signal resource in the reference signal resource group and is combined to determine a joint radio link quality. Then the joint radio link quality is compared with Qout to determine whether the beam failure occurs. The at least one reference signal resource set for the beam failure detection may include one or more reference signal resource subsets, each of which has a same type or different type. The type is as described in the above embodiment, which is not be elaborated herein.

With the beam failure detection method according to the embodiment of the disclosure, the configuration information sent by the network device to the terminal may be used for configuring multiple reference signal resource sets (RS sets). For example, the configuration information is used to configure a first reference signal resource set (first RS set) and a second reference signal resource set (second RS set). The first RS set includes reference signal resources for performing the beam failure detection for a first TRP. The second RS set includes reference signal resources for performing the beam failure detection for a second TRP.

Reference signal resources having a pair relationship may be included in the first RS set the second RS set. For example, a first RS in the first RS set has a pair relationship with a second RS in the second RS set.

In an implementation of embodiments of the disclosure, the reference signal resource subset may include reference signal resources having a pair relationship in the first RS set and in the second RS set. For example, the first RS set includes {RS#0, RS#1} and the second RS set includes {RS#2, RS#3}, there may be the following conditions.

In a first condition, the RS#0 has a pair relationship with the RS#2. The RS#0 and the RS#2 may be a same RS, and the RS is configured with two TCI states. The two TCI states are configured to transmit the PDCCH by the mlti-TRP. Alternatively, the RS#0 and the RS#2 are different RSs, and each of the RS#0 and the RS#2 is configured with one TCI state. The two TCI states are configured to transmit the PDCCH by the multi-TRP. In this case, the reference signal resource subset 1 is {RS#0, RS#2}. Then, when the beam failure detection based on the serving cell is performed, and the serving cell corresponds to the first TRP and the second TRP, it should be considered that a joint radio link quality on the two reference signal resources {RS#0, RS#2} in the reference signal resource subset 1 is compared with Qout, instead of comparing each of radio link qualities of the RS#0 and the RS#2 with Qout. A reference signal for the beam failure detection based on the serving cell may further include the RS#1 in the first RS set and the RS#3 in the second RS set, and each of radio link qualities of RS#1 and RS#3 is compared with Qout.

In addition, in the first condition, there are multiple ways for the beam failure detection based on the TRP, including but not limited to the followings. In a first way, the first TRP is determined based on a comparison between a separate radio link quality of the RS in the first RS set and Qout, and the second TRP is determined based on a comparison between a separate radio link quality of the RS in the second RS set and Qout. In a second way, the first TRP is determined based on a comparison between the joint radio link quality of the reference signal resource subset 1 and Qout, and a comparison between the separate radio link quality of the RS#1 and Qout, and/or the second TRP is determined based on a comparison between the joint radio link quality of the reference signal resource subset 1 and Qout and a comparison between the separate radio link quality of the RS#3 and Qout.

In a second condition, the RS#0 has a pair relationship with the RS#2. The RS#0 and the RS#2 may a same RS, and the RS is configured with two TCI states. The two TCI states are configured to transmit the PDCCH by the multi-TRP. Alternatively, the RS#0 and the RS#2 are different RSs, and each of the RS#0 and the RS#2 is configured with one TCI state. The two TCI states are configured to transmit the PDCCH by the multi-TRP. In this case, the reference signal resource subset 1 is {RS#0, RS#2}. The RS#1 has a pair relationship with the RS#3. The RS#1 and the RS#3 may be a same RS, and the RS is configured with two TCI states. The two TCI states are configured to transmit the PDCCH by the multi-TRP. Alternatively, the RS#1 and the RS#3 are different RSs, and each of the RS#1 and the RS#3 is configured with one TCI state. The two TCI states are configured to transmit the PDCCH by the multi-TRP. In this case, the reference signal resource subset 2 is {RS#1, RS#3}. Then, when the beam failure detection based on the serving cell is performed, and the serving cell corresponds to the first TRP and the second TRP, it should be considered that the joint radio link quality on the two reference signal resources {RS#0 and RS#2} in the reference signal resource subset 1 is compared with Qout, instead of comparing each of the radio link qualities of the RS#0 and the RS#2 with Qout. Furthermore, it should also be considered that the joint radio link quality on the two reference signal resources {RS#1 and RS#3} in the reference signal resource subset 2 is compared with Qout, instead of comparing each of the radio link qualities of the RS#1 and the RS#3 with Qout. Based on the same reason, the Qout value comparing with the joint radio link quality may be the same as or different from the Qout value comparing with each radio link quality.

In addition, in the second condition, there are multiple ways for the beam failure detection based on the TRP, including but not limited to the followings. In a first way, the first TRP is determined based on a comparison between a separate radio link quality of the RS in the first RS set and Qout, and the second TRP is determined based on a comparison between a separate radio link quality of the RS in the second RS set and Qout. In a second way, the first TRP and/or the second TRP are determined based on a comparison between Qout and the joint radio link quality of the reference signal resource subset 1 and subset 2.

FIG 6 is a flow chart illustrating a beam failure detection method according to an exemplary embodiment. As illustrated in FIG 6, the beam failure detection method is applied to a terminal, and includes the following steps.

At step S51, in response to a reference signal resource set including a first RS set and a second RS set, and reference signal resources having a pair relationship being included in the first RS set and the second RS set, the reference signal resources having the pair relationship in the first RS set and the second RS set are determined as a reference signal resource subset.

At step S52, a beam failure detection is performed based on a joint radio link quality of the reference signal resources having the pair relationship in the first RS set and the second RS set.

With the beam failure detection method according to the embodiment of the disclosure, the terminal may determine the pair relationship between the reference signal resources, and determine the reference signal resources included in the reference signal resource subset based on the pair relationship.

In an implementation, in the beam failure detection method according to embodiments of the disclosure, determining the pair relationship between the reference signal resources by the terminal includes at least one of: receiving an indicating signaling of the network device, and determining the pair relationship based on the indicating signaling of the network device; and determining the pair relationship based on a predefined rule.

In an example, the pair relationship is determined based on the indicating signaling of the network device. The network device configures the first RS set for the beam failure detection based on the first TRP and the second RS set for the beam failure detection based on the second TRP, and configures the pair relationship between the first RS in the first RS set and the second RS in the second RS set. The terminal employs part or all of RSs in the first RS set and the second RS set as a third RS set for the beam failure detection of the serving cell and/or TRP. That is, the third RS set may only include the RSs having the pair relationship in the first RS set and the second RS set, or include the RSs having the pair relationship and other RSs not having the pair relationship in the first RS set and the second RS set. For the first RS and the second RS having the pair relationship, the terminal needs to compare the joint radio link quality on the first RS and the second RS with Qout to determine whether the beam failure occurs. For other RSs not having the pair relationship, a radio link quality of each RS is directly compared with Qout to determine whether the beam failure occurs.

In another example, the pair relationship is determined based on the predefined rule. The network device configures the first RS set for the beam failure detection based on the first TRP and the second RS set for the beam failure detection based on the second TRP, but the network device does not configure the pair relationship between RSs in the first RS set and the second RS set. The terminal determines RSs at a same position in the first RS set and the second RS set as the reference signal resources having the pair relationship. The joint radio link quality of the reference signal resources having the pair relationship is compared with Qout to determine whether the beam failure occurs.
a) For example, the first RS set includes the first RS and the second RS, and the second RS set includes a third RS and a fourth RS. The terminal determines the first RS and the third RS as the reference signal resources having the pair relationship, and determines the second RS and the fourth RS as the reference signal resources having the pair relationship. Alternatively, the terminal only determines the first RS and the third RS as the reference signal resources having the pair relationship, and does not determine the second RS and the fourth RS as the reference signal resources having the pair relationship.
b) Alternatively, the first RS set includes the first RS and the second RS, and the second RS set includes the third RS. The terminal determines the first RS and the third RS as the reference signal resources having the pair relationship.

In the beam failure detection method for according to embodiment of the disclosure, the configuration information sent by the network device to the terminal may be used to configure one or more TCI states of one or more CORESETs. The terminal determines the reference signal resource set for the beam failure detection based on the one or more TCI states of the one or more CORESETs.

The reference signal resource subset may include reference signal resources indicated by the TCI states of CORESETs or search space sets (SS sets) having the pair relationship.

In an implementation, the CORESETs having the pair relationship include a CORESET corresponding to multiple TCI state. Alternatively, the SS sets having the pair relationship are two SS sets configured with a connection relationship and for multi-TRP PDCCH transmission. Reference signal resources indicated by one or more TCI states corresponding to one or two CORESETS associated with the two SS sets are configured as one reference signal resource subset. Alternatively, the CORESETs having the pair relationship include CORESETs respectively associated with multiple SS sets having the connection relationship.

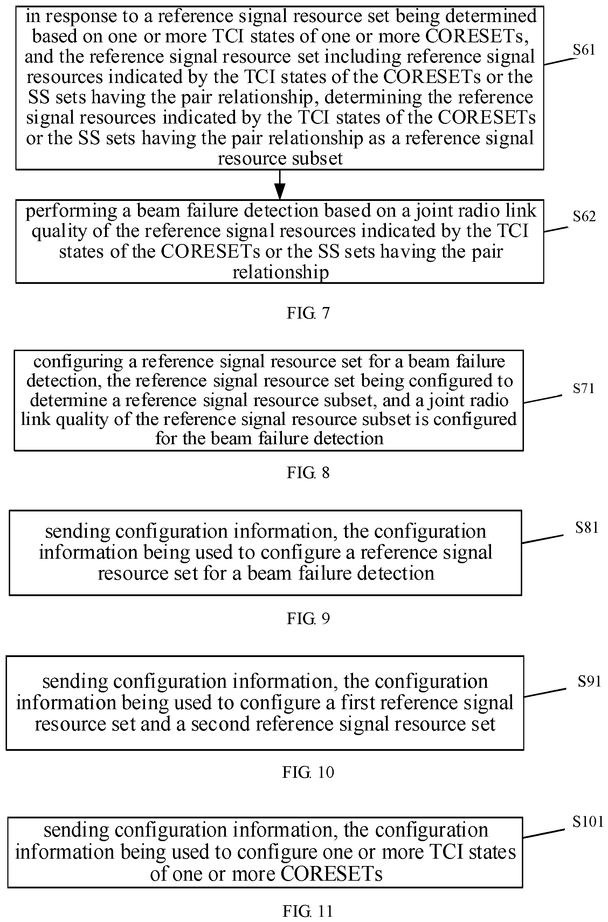

FIG 7 is a flow chart illustrating a beam failure detection method according to an exemplary embodiment. As illustrated in FIG 7, the beam failure detection method is applied to a terminal, and includes the following steps.

At step S61, in response to a reference signal resource set being determined based on one or more TCI states of one or more CORESETs and the reference signal resource set including reference signal resources indicated by the TCI states of the CORESETs or the SS sets having the pair relationship, the reference signal resources indicated by the TCI states of the CORESETs or the SS sets having the pair relationship are determined as a reference signal resource subset.

At step S62, a beam failure detection is performed based on a joint radio link quality of the reference signal resources indicated by the TCI states of the CORESETs or the SS sets having the pair relationship.

In an example, the network device does not configure the terminal with the reference signal resource set for the beam failure detection of the TRP and/or serving cell. The terminal determines a default reference signal resource set for the beam failure detection of the TRP and/or serving cell. The default reference signal resource set for the beam failure detection of the TRP and/or serving cell may be determined based on the reference signal resource indicated by the TCI state of the CORESET. When a certain CORESET corresponds to two TCI states, the reference signal resources indicated by the two TCI states are determined as the reference signal resources having the pair relationship. When there are two SS sets (i.e., SS sets for transmitting the PDCCH by the Multi-TRP) having the connection relationship, the reference signal resources indicated by the TCI states of the CORESETs respectively associated with the two SS sets are determined as the reference signal resources having the pair relationship. It is determined whether the joint radio link quality on the reference signal resources is lower than Qout based on a comparison between the joint radio link quality of the reference signal resources having the pair relationship and Qout. And/or a radio link quality of a reference signal resource indicated by a TCI state of another CORESET is directly compared with Qout to determine whether the radio link quality on the reference signal resource is lower than Qout.

The reference signal resource subset corresponding to reference signal resources indicated by the TCI states of the CORESETs or the SS sets having the pair relationship may include: the reference signal resources indicated by two TCI states corresponding to one CORESET; and/or the reference signal resources indicated by TCI states of CORESETs corresponding to two SS sets having the connection relationship, and a reference signal resource indicated by one TCI state of the CORESET not having the connection relationship.

In case that the beam failure is determined based on the reference signal resource set for the beam failure detection of each TRP, and the beam failure is determined based on the reference signal resource set of the serving cell,
when the joint radio link quality on the reference signal resources indicated by the TCI states of the CORESETs or the SS sets having the pair relationship is not lower than Qout, the beam failure does not occur in the TRP and/or serving cell associated with the reference signal. Only when the joint radio link quality of one or more reference signal resources in each reference signal resource subset in the reference signal resource set for the beam failure detection is lower than Qout, it may be determined that the beam failure occurs in the TRP and/or serving cell corresponding to the reference signal resource set for the beam failure detection, and the link recovery is needed.

It may be understood that, in embodiments of the disclosure, the reference signal resource involved in the above embodiments may be a synchronization signal and PBCH block (SSB), or a channel state information (CSI) reference signal (CSI-RS). The CSI-RS is at least one of a periodic CSI-RS, a semi-persistent CSI-RS and an aperiodic CSI-RS.

It may be further understood that, the reference signal resources having the pair relationship which are involved in the above-mentioned embodiment in embodiments of the disclosure may be reference signal resources in a same reference signal type or reference signal resources in different reference signal types.

It may be further understood that, the reference signal resource set and/or the reference signal resource subset involved in the above-mentioned embodiment in embodiments of the disclosure may be configured explicitly or implicitly.

In embodiments of the disclosure, with reference to examples, description will be made below to an implementation process of determining RSs included in a RS set for the BFD of the TRP and/or serving cell in a multi-TRP PDCCH scenario, and comparing a joint radio link quality of reference signal resources indicated by TCI states corresponding to resources for multi-TRP PDCCH transmission with Qout to ensure the accuracy of the beam failure detection according to embodiments of the disclosure.

In an implementation, the reference signal resource set for the beam failure detection of the serving cell is configured explicitly.

The reference signal resource set for the beam failure detection of the serving cell is explicitly configured to include N (N is a positive integer) reference signal resources. At least one of the N reference signal resources is configured with two TCI states. A radio link quality on the reference signal resource received by the terminal employing the two TCI states is compared with Qout to determine whether the beam failure occurs.

The reference signal resource set for the beam failure detection of the serving cell is explicitly configured to include N (N is an integer greater than 1) reference signal resources. At least two reference signal resources in the N reference signal resources form a reference signal resource group. Each reference signal resource in the reference signal resource group is configured with one TCI state, the radio link qualities of respective reference signals received by using the TCI states corresponding to respective reference signal resources in the reference signal resource group are combined to obtain a joint radio link quality, and the joint radio link quality is compared with Qout to determine whether the beam failure occurs.

The joint radio link quality may also be written as the combined radio link quality on two reference signals. A detailed calculation way may include, but be not limited to, the following: when the signal strength, SINR or SNR is calculated, the signal strength S is a sum of signal strengths on the two reference signals, and/or the interference is an interference other than the signal strengths on the two reference signals.

In an implementation, the reference signal resource for the beam failure detection of the serving cell is configured implicitly.

In an example, in a case where the reference signal resource for the beam failure detection based on the TRP is configured explicitly, the reference signal resource for the beam failure detection of the serving cell includes the explicitly configured reference signal resource for the beam failure detection of the TRP.

The network device explicitly configures the first RS set for the beam failure detection based on the first TRP and the second RS set for the beam failure detection based on the second TRP. The base station also explicitly configures the pair relationship between the first RS in the first RS set and the second RS in the second RS set. The terminal takes part or all of RSs in the first set and second RS set as the third RS set for the beam failure detection of the serving cell and/or TRP. The third RS set is configured to perform the beam failure detection of the serving cell and/or TRP. The third RS set may only include the first RS and the second RS having the pair relationship, or may include the first RS and the second RS having the pair relationship and other RSs not having the pair relationship. For the first RS and the second RS having the pair relationship, the terminal needs to obtain the joint radio link quality from the radio link qualities on the first RS and the second RS, and then compares the joint radio link quality with Qout to determine whether the beam failure occurs. For the other RSs not having the pair relationship, the radio link quality of each RS is directly compared with Qout to determine whether the beam failure occurs.

The network device explicitly configures the first RS set for the beam failure detection based on the first TRP and the second RS set for the beam failure detection based on the second TRP, but the network device dose not explicitly configure the pair relationship between RSs in the first RS set and the second RS set. The terminal determines the RSs at the same position in the first RS set and the second RS set as a pair. The joint radio link quality is obtained from the radio link qualities of the RSs in the pair and compared with Qout to determine whether the beam failure occurs.
a) For example, the first RS set includes the first RS and the second RS, and the second RS set includes the third RS and the fourth RS. The terminal determines the first RS and the third RS as a pair, and determines the second RS and the fourth RS as a pair. Alternatively, the terminal only determines the first RS and the third RS as a pair, and does not determine the second RS and the fourth RS as a pair.
b) Alternatively, the first RS set includes the first RS and the second RS, and the second RS set includes the third RS. The terminal determines the first RS and the third RS as a pair.

In another example of embodiments of the disclosure, in a case that the reference signal resource for the beam failure detection based on the TRP is configured implicitly, in a way for implicitly confirming the reference signal resource for the beam failure detection of the serving cell, when the network device does not explicitly configure the reference signal resource set for the beam failure detection of the TRP, a default reference signal resource set for the beam failure detection of the serving cell is determined based on the reference signal resource indicated by the TCI state of the CORESET. When a certain CORESET corresponds to two TCI states, the reference signal resources indicated by the two TCI states may be taken as a pair. When there are two SS sets having the association relationship for transmitting the PDCCH by the multi-TRP, the reference signal resources indicated by the TCI states of the CORESETs associated with the two SS sets are taken as a pair. A joint radio link quality is obtained based on the radio link qualities of the RSs in the pair and then compared with Qout to determine whether the beam failure occurs. A radio link quality of a reference signal resource of a TCI state of another CORESET is directly compared with Qout to determine whether the beam failure occurs.

Based on a same concept, the embodiments of the disclosure provide a beam failure detection method, which is applied to a network device.

FIG 8 is a flow chart illustrating a beam failure detection method according to an exemplary embodiment. As illustrated in FIG 8, the beam failure detection method is applied to a network device, and includes the following steps.

At step S71, a reference signal resource set for a beam failure detection is configured. The reference signal resource set is configured to determine a reference signal resource subset, and a joint radio link quality of the reference signal resource subset is configured for the beam failure detection.

In embodiments of the disclosure, it may be understood that the reference signal resource set for the beam failure detection is a reference signal resource set for the beam failure detection of a serving cell and/or TRP. The reference signal resource set for the beam failure detection may include N reference signal resources, where N is a positive integer. The reference signal resources for performing the beam failure detection based on the joint radio link quality may be a determined subset in the reference signal resource set. The number of reference signal resources included in the reference signal resource subset may be M, where M is less than or equal to N.

In the beam failure detection method according to embodiments of the disclosure, the network device may send configuration information for determining the reference signal resource set for the beam failure detection to a terminal.

FIG 9 is a flow chart illustrating a beam failure detection method according to an exemplary embodiment. As illustrated in FIG 9, the beam failure detection method is applied to a network device, and includes the following steps.

At step S81, configuration information is sent. The configuration information is used to configure a reference signal resource set for a beam failure detection.

In an implementation, the configuration information is used to configure at least one reference signal resource set for the beam failure detection.

In the beam failure detection method according to embodiments of the disclosure, in a case where the configuration information is used to configure the at least one reference signal resource set for the beam failure detection, on the one hand, the reference signal resource included in the reference signal resource subset is at least one reference signal resource each configured with multiple TCI states in the reference signal resource set. Each reference signal resource of the at least one reference signal resource is a reference signal resource subset. On the other hand, the reference signal resource subset is one reference signal resource group in the reference signal resource set. The reference signal resource group includes L reference signal resources, each of which is configured with one TCI state, where L is a positive integer.

FIG 10 is a flow chart illustrating a beam failure detection method according to an exemplary embodiment. As illustrated in FIG 10, the beam failure detection method is applied to a network device, and includes the following steps.

At step S91, configuration information is sent. The configuration information is used to configure a first reference signal resource set and a second reference signal resource set.

The first RS set includes reference signal resources for performing the beam failure detection for a first TRP. The second RS set includes reference signal resources for performing the beam failure detection for a second TRP.

The first RS set and the second RS set may include reference signal resources having a pair relationship. The reference signal resource subset includes the reference signal resources having the pair relationship in the first RS set and the second RS set.

In the beam failure detection method according to embodiments of the disclosure, the network device may configure the pair relationship between the reference signal resources. The pair relationship configured by the network device is used to configure the reference signal resources included in the reference signal resource subset.

In an implementation, configuring the pair relationship between the reference signal resources may include sending an indicating signaling by the network device, and the indicating signaling being used to configure the pair relationship; and/or configuring the pair relationship by the network device based on a predefined rule.

FIG 11 is a flow chart illustrating a beam failure detection method according to an exemplary embodiment. As illustrated in FIG 11, the beam failure detection method is applied to a network device, and includes the following steps.

At step S101, configuration information is sent. The configuration information is used to configure one or more TCI states of one or more CORESETs.

In an implementation, when the configuration information is used to configure the one or more TCI states of the one or more CORESETs, the reference signal resource set is determined based on the reference signal resource indicated by the TCI state.

In an implementation, the reference signal resource subset may include the reference signal resources indicated by TCI states of CORESETs or SS sets having a pair relationship.

In an implementation, the CORESETs having the pair relationship includes a CORESET corresponding to multiple TCI states. Alternatively, the CORESETs having the pair relationship include CORESETs respectively associated with multiple SS sets having a connection relationship.

It may be understood that, the beam failure detection method applied to the network device according to embodiments of the disclosure is similar to the beam failure detection method applied to the terminal, and the similarities are not repeated here.

It may be further understood that, the beam failure detection method according to embodiments of the disclosure may be applied to an implementation process of performing the beam failure detection based on interaction between the terminal and the network device. In the method of performing the beam failure detection based on the interaction between the terminal and the network device, the terminal and the network device have their own functions for implementing the above embodiments, which will not be described in detail here.

It should be noted that, the skilled in the art can understand that the above multiple implementations/embodiments involved in embodiments of the disclosure can be used together with the above embodiments or independently. Whether the embodiment is used alone or in combination with the above embodiments, the implementation principles are similar. In the implementation of the disclosure, some embodiments are described together with the used implementations. Of course, the skilled in the art can understand that such illustration is not a limitation of embodiments of the disclosure.

Based on the same concept, the embodiments of the disclosure also provide a beam failure detection apparatus.

It may be understood that, the beam failure detection apparatus according to embodiments of the disclosure includes corresponding hardware structures and/or software modules for performing various functions in order to implement the above-mentioned functions. The embodiments of the disclosure may be implemented in a form of hardware or a combination of hardware and computer software in combination with units and algorithm steps of each example disclosed in embodiments of the disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of embodiments of the disclosure.

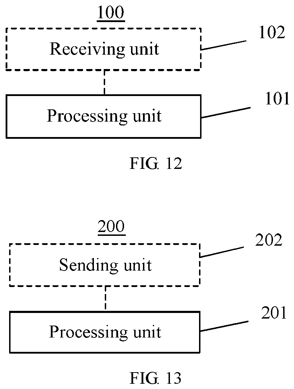

FIG 12 is a block diagram illustrating a beam failure detection apparatus according to an exemplary embodiment. Referring to FIG 12, the beam failure detection apparatus 100 applied to the terminal includes a processing unit 101.

The processing unit 101 is configured to determine a reference signal resource set for a beam failure detection, to determine a reference signal resource subset based on the reference signal resource set, and to perform the beam failure detection based on a joint radio link quality of the reference signal resource subset.

In an implementation, the beam failure detection apparatus 100 also includes a receiving unit 102. The receiving unit 102 is configured to receive configuration information sent by a network device; and to determine the reference signal resource set for the beam failure detection based on the configuration information.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the processing unit 101 is also configured to determine the pair relationship, and to determine reference signal resources included in the reference signal resource subset based on the pair relationship.

In an implementation, the beam failure detection apparatus 100 also includes a receiving unit 102. The receiving unit 102 is configured to receive an indicating signaling from the network device and to determine the pair relationship based on the indicating signaling. And/or the processing unit 101 is configured to determine the pair relationship based on a predefined rule.

In an implementation, the configuration information is used to configure one or more TCI states of one or more CORESETs.

In an implementation, the reference signal resource set is determined based on reference signal resources indicated by the one or more TCI states.

In an implementation, the reference signal resource subset includes reference signal resources indicated by TCI states of CORESETs having a pair relationship. The CORESETs having the pair relationship include CORESETs corresponding to a plurality of TCI states; and/or the CORESETs having the pair relationship include CORESETs respectively associated with a plurality of search space sets having a connection relationship.

In an implementation, the processing unit 101 is configured to determine the joint radio link quality of the one or more reference signal resources in the reference signal resource subset; and to perform the beam failure detection based on the joint radio link quality and a radio link quality threshold.

FIG 13 is a block diagram illustrating a beam failure detection apparatus according to an exemplary embodiment. Referring to FIG 13, the beam failure detection apparatus applied to a network device includes a processing unit 201.

The processing unit 201 is configured to configure a reference signal resource set for a beam failure detection, in which the reference signal resource set is configured to determine a reference signal resource subset, and a joint radio link quality of the reference signal resource subset is configured for the beam failure detection.

In an implementation, the beam failure detection apparatus 200 also includes a sending unit 202. The sending unit 202 is configured to send configuration information, in which the configuration information is used to configure the reference signal resource set for the beam failure detection.

In an implementation, the configuration information is used to configure at least one reference signal resource set for the beam failure detection.

In an implementation, a reference signal resource included in the reference signal resource subset is at least one reference signal resource each configured with a plurality of TCI states in the reference signal resource set.

In an implementation, the reference signal resource subset is one reference signal resource group in the reference signal resource set. The reference signal resource group includes L reference signal resources, and each of the L reference signal resources is configured with one TCI state, where L is a positive integer.

In an implementation, the configuration information is used to configure a first reference signal resource set and a second reference signal resource set. The first reference signal resource set includes a reference signal resource for performing the beam failure detection for a first TRP, and the second reference signal resource set includes a reference signal resource for performing the beam failure detection for a second TRP.

In an implementation, the reference signal resource subset includes reference signal resources having a pair relationship in the first reference signal resource set and the second reference signal resource set.

In an implementation, the processing unit 201 is also configured to configure the pair relationship, in which the pair relationship is used to configure the reference signal resources included in the reference signal resource subset.

In an implementation, the beam failure detection apparatus 200 also includes a sending unit 202. The sending unit 202 is configured to send an indicating signaling, the indicating signaling being used to configure the pair relationship; and/or the processing unit 201 is configured to configure the pair relationship based on a predefined rule.

In an implementation, the configuration information is used to configure one or more TCI states of one or more control resource sets.

In an implementation, the reference signal resource set is determined based on reference signal resources indicated by the one or more TCI states.

In an implementation, the reference signal resource subset includes reference signal resources indicated by TCI states of CORESETs having a pair relationship; the CORESETs having the pair relationship include CORESETs corresponding to a plurality of TCI states; and/or the CORESETs having the pair relationship include CORESETs respectively associated with a plurality of search space sets having a connection relationship.

With respect to the apparatus in the above embodiments, the specific manners for performing operations for individual modules therein have been described in detail in the embodiments regarding the methods, which will not be elaborated herein.

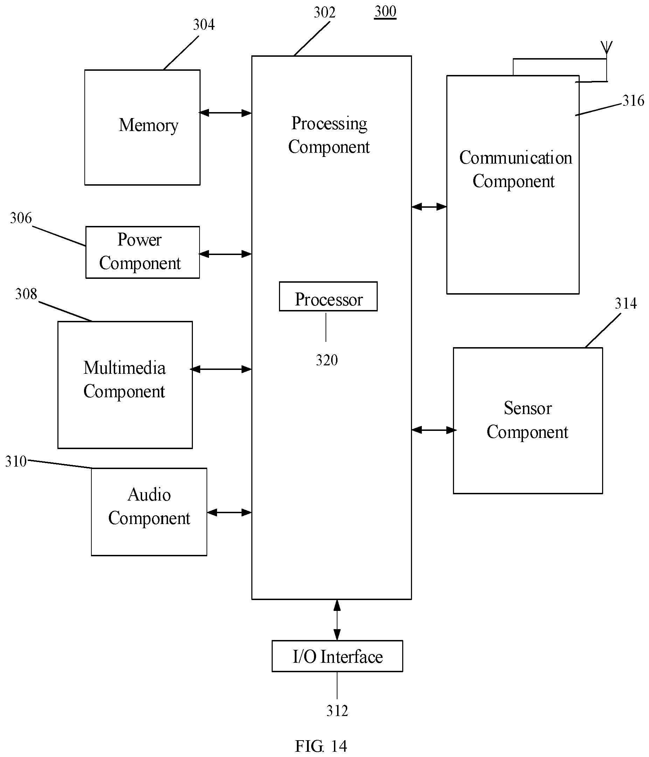

FIG 14 is a block diagram illustrating a beam failure detection apparatus according to an exemplary embodiment. For example, the apparatus 300 may be a mobile phone, a computer, a digital broadcast user device, a messaging sending and receiving equipment, a game console, a tablet, a medical device, a fitness device, a personal digital assistant, or the like.

As illustrated in FIG 14, the apparatus 300 may include one or more of: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 302 to execute instructions to perform all or part of the steps in the above described methods. Moreover, the processing component 302 may include one or more modules which facilitate the interaction between the processing component 302 and other components. For example, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300 for performing contraction data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 is configured to provide power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the apparatus 300 is in an operation mode, such as an adjustment mode or a video mode. Each of the front camera and the rear camera may be a fixed optical lens system or have focus and optical zoom capability.

The audio component 310 is configured to output and/or input audio signals. For example, the audio component 310 includes a microphone ("MIC") for receiving an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 is configured to provide an interface between the processing component 302 and peripheral interface modules, such as a keyboard, a click wheel, buttons, and the like. The buttons may include, but be not limited to, a home button, a volume button, a starting button, and a locking button.

The sensor component 314 includes one or more sensors for providing status assessments of various aspects of the apparatus 300. For example, the sensor component 314 may detect an open/closed status of the apparatus 300, relative positioning of components, e.g., the display and the keypad of the apparatus 300, a change in position of the apparatus 300 or a component of the apparatus 300, a presence or absence of user contraction with the apparatus 300, an orientation or an acceleration/deceleration of the apparatus 300, and a change in temperature of the apparatus 300. The sensor component 314 may include a proximity sensor for detecting the presence of nearby objects without any physical contact. The sensor component 314 may also include a light sensor, such as a CMOS (complementary metal-oxide-semiconductor)) or a CCD (charge coupled device) image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 may access a wireless network based on a communication standard, such as Wi-Fi, 2G, or 3G, or a combination thereof. In an exemplary embodiment, the communication component 316 receives a broadcast signal or broadcast associated information from an external broadcast management system via a broadcast channel. In an exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiments, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer readable storage medium including instructions, such as the memory 304 including the instructions. The instructions may be executed by the processor 320 in the apparatus 300 for performing the above methods. For example, the non-transitory computer readable storage medium may be a ROM, a RAM, a CD-ROM, a magnetic tape, a floppy disc, an optical data storage device, and the like.

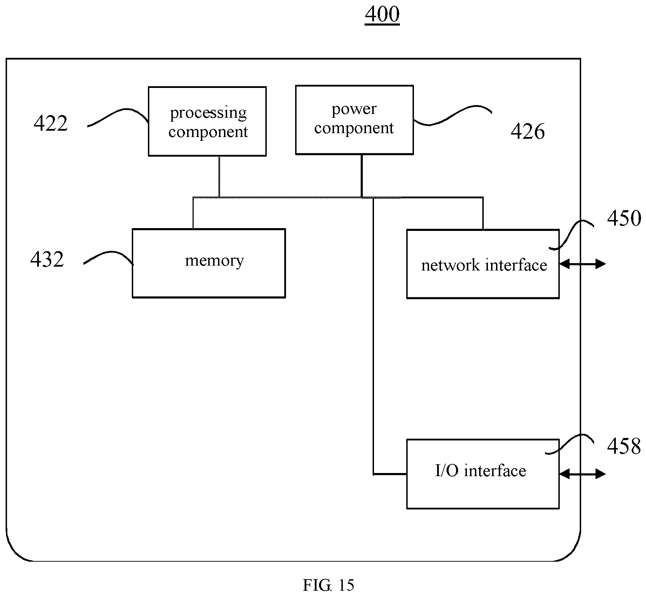

FIG 15 is a block diagram illustrating a beam failure detection apparatus according to an exemplary embodiment. For example, the apparatus 400 may be provided as a network-side device. Referring to FIG 15, the apparatus 400 includes a processing component 422, further including one or more processors, and memory resources represented by a memory 432 for storing instructions, such as application programs, executable by the processing component 422. The application program stored in the memory 432 may include one or more modules each corresponding to a set of instructions. In addition, the processing component 422 is configured to execute instructions to execute any of the above methods.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as a windows server ^{™}, a Mac OS X^{™}, a Unix^{™}, a Linux^{™}, a FreeBSD^{™} or the like.

In an exemplary embodiment, there is also provided a non-transitory computer readable storage medium including instructions, such as a memory 432 including the instructions. The instructions may be executed by a processing component 422 in the apparatus 400 for performing the above methods. For example, the non-transitory computer readable storage medium may be a ROM, a RAM, a CD-ROM, a magnetic tape, a floppy disc, an optical data storage device, and the like.

It may be further understood that, the term "multiple" in the disclosure refers to two or more, and other quantifiers are similar thereto. The term "and/or", which describes an association relationship of associated objects, means that there may be three kinds of relationships, for example, A and/or B, which may mean that A exists alone, A and B exist together, and B exists alone. A character "/" generally indicates that contextual objects are in an "or" relationship. "A/an" and "the" in singular forms are also intended to include plural forms, unless clearly indicated in the context otherwise.

It may be further understood that, the terms such as "first", "second" and the like are used to describe various information, but these information shall not be limited to these terms. These terms are only used to distinguish a same type of information from each other and do not denote a particular order or importance degree. In fact, the terms such as "first", "second" and the like may be used interchangeably. For example, first information may also be referred to as second information, and similarly, the second information may also be referred to as the first information, without departing from the scope of the disclosure.

It may be further understood that, although the operations are described in a specific order in the accompanying drawings in embodiments of the disclosure, it should not be understood that the operations are required to be performed in the specific order or in a serial order illustrated, or that all the operations illustrated are required to be performed to obtain a desired result. In a certain circumstance, multitasking and parallel processing may be beneficial.

Other implementations of the disclosure may be apparent to those skilled in the art from consideration of the specification and practice of the disclosure disclosed here. The disclosure is intended to cover any variations, uses, or adaptations of embodiments of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A beam failure detection method, applicable to a terminal, comprising:
determining a reference signal resource set for a beam failure detection; and
determining a reference signal resource subset based on the reference signal resource set, and performing the beam failure detection based on a joint radio link quality of the reference signal resource subset.

2. The method of claim 1, wherein determining the reference signal resource set for the beam failure detection comprises:
receiving configuration information sent by a network device; and
determining the reference signal resource set for the beam failure detection based on the configuration information.

3. The method of claim 2, wherein the configuration information is used to configure at least one reference signal resource set for the beam failure detection.

4. The method of claim 3, wherein a reference signal resource comprised in the reference signal resource subset is at least one reference signal resource each configured with a plurality of transmission configuration indication (TCI) states in the reference signal resource set.

5. The method of claim 3, wherein the reference signal resource subset is one reference signal resource group in the reference signal resource set, the reference signal resource group comprises L reference signal resources, and each of the L reference signal resources is configured with one TCI state, where L is a positive integer.

6. The method of claim 3, wherein the at least one reference signal resource set for the beam failure detection comprises: a first reference signal resource set and a second reference signal resource set;
wherein the first reference signal resource set comprises a reference signal resource for performing the beam failure detection for a first transmission and reception point (TRP), and the second reference signal resource set comprises a reference signal resource for performing the beam failure detection for a second TRP.

7. The method of claim 6, wherein the reference signal resource subset comprises reference signal resources having a pair relationship in the first reference signal resource set and the second reference signal resource set.

8. The method of claim 7, further comprising:
determining the pair relationship; and
determining one or more reference signal resources comprised in the reference signal resource subset based on the pair relationship.

9. The method of claim 8, wherein determining the pair relationship comprises at least one of:
receiving an indicating signaling from the network device, and determining the pair relationship based on the indicating signaling; and
determining the pair relationship based on a predefined rule.

10. The method of claim 2, wherein the configuration information is used to configure one or more TCI states of one or more control resource sets.

11. The method of claim 10, wherein the reference signal resource set is determined based on one or more reference signal resources indicated by the one or more TCI states.

12. The method of claim 11, wherein the reference signal resource subset comprises reference signal resources indicated by TCI states of control resource sets having a pair relationship;
the control resource sets having the pair relationship comprise control resource sets corresponding to a plurality of TCI states; and/or the control resource sets having the pair relationship comprise control resource sets respectively associated with a plurality of search space sets having a connection relationship.

13. The method of any of claims 1 to 12, wherein performing the beam failure detection based on the joint radio link quality of the reference signal resource subset comprises:
determining the joint radio link quality of one or more reference signal resources in the reference signal resource subset; and
performing the beam failure detection based on the joint radio link quality and a radio link quality threshold.

14. Abeam failure detection method, applicable to a network device, comprising:
configuring a reference signal resource set for a beam failure detection, wherein the reference signal resource set is configured to determine a reference signal resource subset, and a joint radio link quality of the reference signal resource subset is configured for the beam failure detection.

15. The method of claim 14, wherein configuring the reference signal resource set for the beam failure detection comprises:
sending configuration information, wherein the configuration information is used to configure the reference signal resource set for the beam failure detection.

16. The method of claim 15, wherein the configuration information is used to configure at least one reference signal resource set for the beam failure detection.

17. The method of claim 16, wherein a reference signal resource comprised in the reference signal resource subset is at least one reference signal resource each configured with a plurality of transmission configuration indication (TCI) states in the reference signal resource set.

18. The method of claim 16, wherein the reference signal resource subset is one reference signal resource group in the reference signal resource set, the reference signal resource group comprises L reference signal resources, and each of the L reference signal resources is configured with one TCI state, where L is a positive integer.

19. The method of claim 16, wherein the configuration information is used to configure a first reference signal resource set and a second reference signal resource set,
wherein the first reference signal resource set comprises a reference signal resource for performing the beam failure detection for a first transmission and reception point (TRP), and the second reference signal resource set comprises a reference signal resource for performing the beam failure detection for a second TRP.

20. The method of claim 19, wherein the reference signal resource subset comprises reference signal resources having a pair relationship in the first reference signal resource set and the second reference signal resource set.

21. The method of claim 20, further comprising:
determining the pair relationship, wherein the pair relationship is used to configure the reference signal resources comprised in the reference signal resource subset.

22. The method of claim 21, wherein configuring the pair relationship comprises at least one of:
sending an indicating signaling, wherein the indicating signaling is used to configure the pair relationship; and
configuring the pair relationship based on a predefined rule.

23. The method of claim 15, wherein the configuration information is used to configure one or more TCI states of one or more control resource sets.

24. The method of claim 23, wherein the reference signal resource set is determined based on one or more reference signal resources indicated by the one or more TCI states.

25. The method of claim 24, wherein the reference signal resource subset comprises reference signal resources indicated by TCI states of control resource sets having a pair relationship;
the control resource sets having the pair relationship comprise control resource sets corresponding to a plurality of TCI states; and/or the control resource sets having the pair relationship comprise control resource sets respectively associated with a plurality of search space sets having a connection relationship.

26. A beam failure detection apparatus, applicable to a terminal, comprising:
a processing unit, configured to determine a reference signal resource set for a beam failure detection, to determine a reference signal resource subset based on the reference signal resource set, and to perform the beam failure detection based on a joint radio link quality of the reference signal resource subset.

27. A beam failure detection apparatus, applicable to a network device, comprising:
a processing unit, configured to configure a reference signal resource set for a beam failure detection, wherein the reference signal resource set is configured to determine a reference signal resource subset, and a joint radio link quality of the reference signal resource subset is used for the beam failure detection.

28. A beam failure detection apparatus, comprising:
a processor; and
a memory, configured to store instructions executable by the processor,
wherein the processor is configured to perform the beam failure detection method according to any of claims 1-13 or the beam failure detection method according to any of claims 14-25.

29. A storage medium having instructions stored thereon, wherein, when the instructions in the storage medium are executed by a processor in a terminal, the terminal is enabled to execute the beam failure detection method according to any of claims 1-13; or when the instructions in the storage medium are executed by a processor in a network device, the network device is enabled to execute the beam failure detection method according to any of claims 14-25.
